# EUROPÄISCHE PATENTSCHRIFT

(11) **EP 3 452 397 B1**
(45) Veröffentlichungstag und Bekanntmachung des Hinweises auf die Patenterteilung: **22.04.2020**
(21) Anmeldenummer: 17721640.5
(22) Anmeldetag: 03.05.2017
(51) Int. Cl.: B66B 5/00, B66B 13/22

(54) **PERSONENTRANSPORTANLAGE MIT ZENTRALER STEUEREINHEIT UND MEHREREN FELDGERÄTEN MIT OPTIMIERTEM FEHLFUNKTIONSERKENNUNGSVERFAHREN**
INSTALLATION FOR TRANSPORTING PERSONS WITH CENTRAL CONTROL UNIT AND A PLURALITY OF FIELD DEVICES WITH OPTIMIZED MALFUNCTION DETECTION METHOD
INSTALLATION DE TRANSPORT DE PASSAGERS COMPRENANT UNE UNITE DE COMMANDE CENTRALE ET PLUSIEURS APPAREILS DE TERRAIN COMPRENANT UN PROCEDE DE RECONNAISSANCE DE DYSFONCTIONNEMENT OPTIMISE

(30) Priorität: 04.05.2016 EP 16168217
(43) Veröffentlichungstag der Anmeldung: 13.03.2019
(73) Patentinhaber: Inventio AG, 6052 Hergiswil (CH)
(72) Erfinder: SONNENMOSER, Astrid, 6280 Hochdorf (CH); LUSTENBERGER, Ivo, 6018 Buttisholz (CH); HARTMANN, Thomas, 6277 Kleinwangen (CH); KNECHT, Adrian, 5312 Döttingen (CH); HEINZ, Kurt, 8107 Buchs (CH)
(86) Internationale Anmeldenummer: PCT/EP2017/060530
(87) Internationale Veröffentlichungsnummer: WO 2017/191186

(56) Entgegenhaltungen:
- US-A1- 2003 111 300
- US-A1- 2005 098 390
- US-B1- 6 267 219
- US-B1- 6 467 585

## Beschreibung

Die vorliegende Erfindung betrifft eine Personentransportanlage, wie beispielsweise eine Aufzuganlage, bei der mehrere Feldgeräte wie z.B. Türschalter, Sicherheitsschalter, o.ä. vorgesehen sind, welche mit einer zentralen Steuereinheit kommunizieren.

Personentransportanlagen werden meist dazu eingesetzt, in Gebäuden oder Bauwerken Personen oder Gegenstände zu befördern. Eine Personentransportanlage kann beispielsweise als Aufzuganlage ausgebildet sein. Alternativ kann eine Personentransportanlage als Fahrtreppe oder Fahrsteig eingerichtet sein.

Nachfolgend werden mögliche Ausgestaltungen von Personentransportanlagen bzw. von Ausführungsformen der Erfindung meist am Beispiel von Aufzuganlagen erläutert. Ausführungsformen der Erfindung lassen sich aber in analoger Weise auch auf Personentransportanlagen in Form von Fahrsteigen, Fahrtreppen oder Ähnlichem umsetzen.

Aufzuganlagen dienen im Allgemeinen dazu, Personen beispielsweise innerhalb eines Bauwerks zwischen verschiedenen Stockwerken befördern zu können. Hierzu kann im Regelfall eine Aufzugskabine innerhalb eines meist vertikalen Aufzugschachts verlagert werden. Wenn die Aufzugskabine ein gewünschtes Stockwerk erreicht hat, kann eine Aufzugtür und gegebenenfalls mit ihr eine zugehörige Stockwerktür geöffnet werden, um Personen einen Zutritt zu der Aufzugskabine bzw. ein Verlassen der Aufzugskabine zu ermöglichen.

Funktionen der Aufzuganlage wie beispielsweise ein Betätigen ihres die Aufzugskabine verlagernden Antriebs werden meist von einer zentralen Steuereinheit gesteuert. Die zentrale Steuereinheit kann insbesondere auch sicherheitsrelevante Funktionen der Aufzuganlage kontrollieren. Dazu kann eine Sicherheitsüberwachungseinheit als Teil der Steuereinheit oder in Kommunikation mit der Steuereinheit vorgesehen sein. Die zentrale Steuereinheit kann dabei beispielsweise Informationen berücksichtigen, die sie durch Verarbeiten von Sensorsignalen oder Sensordaten erhalten kann. Die Funktionen der Aufzuganlage können auch von mehr als einer Steuereinheit gesteuert werden, beispielsweise von einer Steuereinheit, die unter anderem den Antrieb ansteuert und einer weiteren Steuereinheit, die Sicherheitsfunktionen überwacht. Nachfolgend soll unter einer zentralen Steuereinheit jede Steuereinheit verstanden werden, die Sensorsignale verarbeitet und/oder Steuersignale erzeugt. Die Sensorsignale oder Sensordaten können insbesondere von Geräten wie zum Beispiel Türschaltern oder anderen Sicherheitsschaltern stammen, welche in dem die Aufzuganlage aufnehmenden Bauwerk verteilt angeordnet sind und dort beispielsweise lokal vorherrschende Bedingungen oder Zustände detektieren oder messen. Solche Geräte werden hierin nachfolgend als Feldgeräte bezeichnet.

Ferner kann die Steuereinheit selbst Steuersignale erzeugen und an innerhalb des Bauwerks verteilt angeordnete andere Geräte, die beispielsweise über die Steuersignale umsetzende Aktoren verfügen können, übertragen. Die Aktoren können lokal vorherrschende Bedingungen oder Zustände gezielt beeinflussen. Alternativ können Aktoren beispielsweise auch Informationen ausgeben, z.B. optisch oder akustisch. Auch über Aktoren verfügende Geräte sollen hierin nachfolgend als Feldgeräte bezeichnet werden.

Daten bzw. Signale werden in modernen Aufzuganlagen meist über insbesondere serielle Bussysteme, manchmal auch als "Feldbussysteme" oder kurz "Feldbusse" bezeichnet, zwischen den Feldgeräten und der zentralen Steuereinheit übertragen. Hierdurch können insbesondere bei sehr grossen Aufzuganlagen, beispielsweise in hohen Gebäuden, eine Verkabelung zwischen den Feldgeräten und der zentralen Steuereinheit vereinfacht und/oder Datenübertragungszeiten kurz gehalten werden.

EP 2 251 293 A1 beschreibt eine herkömmliche Aufzugsteuervorrichtung mit einer Feldbus-Schnittstelle.

US 6,467,585 B1 und US 2003/111300 A1 beschreiben Aufzugsteuervorrichtungen mit einer zentralen Steuereinheit und mehreren Feldgeräten. Die Feldgeräte können als in einer unverzweigten Kettenkonfiguration logisch miteinander verknüpft angenommen werden. Die zentrale Steuereinheit sendet zu Beginn eines Überwachungszyklus ein Prüftelegramm über das Bussystem an ein erstes Feldgerät in der Kettenkonfiguration sendet. Während des Überwachungszyklus leitet jedes der Feldgeräte in Reaktion darauf, dass das betreffende Feldgerät ein Prüftelegramm empfangen hat, das Prüftelegramm über das Bussystem an ein in der Kettenkonfiguration nächstes Feldgerät weiter, bis das Prüftelegramm ein in der Kettenkonfiguration letztes Feldgerät erreicht, welches das Prüftelegramm an die zentrale Steuereinheit weiterleitet. Die zentrale Steuereinheit prüft, ob die Zeitdauer zwischen Senden und Empfangen des Prüftelegramms festlegbare Bedingungen erfüllt.

Es kann ein Bedarf an einer Personentransportanlage bestehen, bei der ein korrektes Funktionieren von Feldgeräten schnell, zuverlässig und/oder mit einfacher, kostengünstiger Hardware überwacht werden kann. Ferner kann ein Bedarf an einem Verfahren zum effizienten Erkennen von Fehlfunktionen bei Feldgeräten einer Personentransportanlage bestehen. Weiterhin kann ein Bedarf an einem Computerprogrammprodukt, welches einen Computer dazu anweist, ein solches Verfahren durchzuführen oder zu steuern, sowie an einem computerlesbaren Medium mit einem solchen darauf gespeicherten Computerprogrammprodukt bestehen.

Zumindest einem der genannten Bedürfnisse kann mit einem Gegenstand gemäss einem der unabhängigen Patentansprüche entsprochen werden. Vorteilhafte Ausführungsformen sind in den abhängigen Patentansprüchen sowie der nachfolgenden Beschreibung dargelegt.

Gemäss einem ersten Aspekt der vorliegenden Erfindung wird eine Personentransportanlage vorgeschlagen, die eine zentrale Steuereinheit, eine Mehrzahl von Feldgeräten sowie ein Bussystem aufweist. Die Steuereinheit ist zum Steuern von Funktionen der Personentransportanlage ausgelegt. Die Feldgeräte sind innerhalb der Personentransportanlage räumlich verteilt angeordnet. Das Bussystem ist zur Datenübertragung zwischen der zentralen Steuereinheit und den Feldgeräten ausgelegt. Dabei ist jedes Feldgerät dazu eingerichtet, Daten über das Bussystem an die zentrale Steuereinheit und/oder ein anderes Feldgerät auszugeben. Alternativ oder ergänzend ist die zentrale Steuereinheit dazu eingerichtet, Daten über das Bussystem an zumindest eines der Feldgeräte auszugeben. Die Personentransportanlage ist dazu eingerichtet, ein spezielles Fehlfunktionserkennungsverfahren durchzuführen. Bei diesem Fehlfunktionserkennungsverfahren werden die Feldgeräte als in einer unverzweigten Kettenkonfiguration logisch miteinander verknüpft angenommen. Die Steuereinheit sendet zu Beginn eines Überwachungszyklus ein Prüftelegramm über das Bussystem an ein erstes Feldgerät in der Kettenkonfiguration. Während des Überwachungszyklus leitet dann jedes der Feldgeräte in Reaktion darauf, dass das betreffende Feldgerät ein Prüftelegramm empfangen hat, das Prüftelegramm über das Bussystem an ein in der Kettenkonfiguration nächstes Feldgerät weiter, bis das Prüftelegramm ein in der Kettenkonfiguration letztes Feldgerät erreicht. Die Steuereinheit überwacht während des Überwachungszyklus eine über das Bussystem erfolgende Kommunikation zwischen den Feldgeräten, um zu erkennen, wenn ein Feldgerät das Prüftelegramm nicht weiterleitet.

Mögliche Vorteile und Merkmale von Ausführungsformen der Erfindung können unter anderem und ohne die Erfindung einzuschränken als auf den nachfolgend beschriebenen Erkenntnissen und Ideen beruhend angesehen werden.

Ein Betrieb und/oder Funktionen von Personentransportanlagen werden meist mithilfe einer zentralen Steuereinheit gesteuert. In modernen Personentransportanlagen wird dabei ein aktueller Zustand der Personentransportanlage und ihrer Komponenten berücksichtigt. Zu diesem Zweck sind räumlich über die Personentransportanlage verteilt viele Feldgeräte angeordnet, mithilfe derer der aktuelle Zustand der Personentransportanlage bzw. ihrer Komponenten mittels geeignet ausgebildeter Sensoren erfasst und/oder gegebenenfalls mithilfe geeigneter Aktoren beeinflusst werden kann.

Beispielsweise können in der Personentransportanlage Feldgeräte dazu eingerichtet sein, von einem Sensor erzeugte Sensordaten über das Bussystem an die zentrale Steuereinheit auszugeben. Der Sensor kann dabei Teil des Feldgeräts sein. Alternativ kann der Sensor auch lediglich mit dem Feldgerät verbunden sein, so dass das Feldgerät als eine Art Datenübertragungsknoten für den Sensor dient. Sensoren können dabei dazu ausgelegt sein, unterschiedlichste physikalische Grössen zu erfassen, um beispielsweise für eine Sicherheit der Personentransportanlage relevante Parameter permanent oder periodisch überwachen zu können.

Alternativ können Feldgeräte über einen oder mehrere Aktoren verfügen, um bestimmte Aktionen innerhalb der Personentransportanlage ausführen zu können bzw. diese geeignet beeinflussen zu können. Die zentrale Steuereinheit kann dabei dazu eingerichtet sein, von einem Aktor umzusetzende Steuerdaten über das Bussystem an eines der Feldgeräte auszugeben. Der Aktor kann wiederum Teil des Feldgeräts oder lediglich mit dem Feldgerät verbunden sein.

In modernen Personentransportanlagen kann hierbei ein insbesondere serielles Bussystem vorgesehen sein, welches die zentrale Steuereinheit mit jedem der Feldgeräte verbindet und eine Datenübertragung zwischen diesen Komponenten ermöglicht. Mithilfe eines solchen Bussystems kann erreicht werden, dass nicht mehr, wie herkömmlich üblich, jedes Feldgerät separat mit der zentralen Steuereinheit verdrahtet werden braucht. Stattdessen können mehrere Feldgeräte über gemeinsam genutzte Datenleitungen mit der Steuereinheit und gegebenenfalls auch untereinander kommunizieren. Eine Datenübertragung wird dabei im Allgemeinen durch ein von allen Teilnehmern an der Datenkommunikation einzuhaltendes Datenübertragungsprotokoll geregelt. Bei einem derartigen Bussystem kann jeder Busteilnehmer, also hier die zentrale Steuereinheit und alle Feldgeräte jedes auf dem Bussystem gesendete Datentelegramm empfangen. Ein gesendetes Datentelegramm enthält beispielsweise einen so genannten Objekt-Identifier. Dieser Objekt-Identifier kennzeichnet den Inhalt des Datentelegramms und nicht das sendende oder (zumindest nichts direkt) das empfangende Feldgerät. Jedes Feldgerät weiss, welche Datentelegramme für es relevant sind und wertet die Datentelegramme mit den entsprechenden Objekt-Identifiern aus. Damit kann es vorkommen, dass ein Datentelegramm von einem oder mehreren Feldgeräten ausgewertet wird. Ausserdem kann es vorkommen, dass ein Feldgerät nur genau ein oder auch mehrere Datentelegramme empfängt und auswertet. Die zentrale Steuereinheit liest und wertet insbesondere alle Datentelegramme aus.

Da die zentrale Steuereinheit insbesondere dazu ausgelegt sein kann, sicherheitsrelevante Funktionen der Personentransportanlage zu steuern und hierfür zuverlässig auf Daten bzw. Signale von den Feldgeräten zugreifen können muss, kann es notwendig sein, eine korrekte Funktionsfähigkeit der Feldgeräte und der über das Bussystem durchzuführenden Datenübertragung der Feldgeräte mit der zentralen Steuereinheit permanent oder in kurzen Zeitabständen zu überwachen. Es kann zum Beispiel ein wesentlicher Aspekt zur sicheren Überwachung einer Personentransportanlage sein, dass ein Ausfall eines einzelnen Feldgeräts sehr schnell erkannt werden kann.

Beispielsweise kann es bei einer Aufzuganlage notwendig sein, sehr schnell zu erkennen, wenn ein als Türschalter ausgestaltetes Feldgerät, welches einen Schliesszustand einer Aufzugtür oder Stockwerktür innerhalb der Aufzuganlage überwachen soll, ausfällt. Ein solcher Ausfall eines einzelnen Feldgeräts kann durch eine Fehlfunktion in dem Feldgerät selbst bedingt sein. Es kann jedoch auch die Datenübertragung zwischen dem Feldgerät und der zentralen Steuereinheit über das Bussystem lokal gestört, insbesondere lokal unterbrochen sein. Hierfür kann insbesondere bei grossen Personentransportanlagen ein erhöhtes Risiko bestehen, bei denen einzelne Feldgeräte jeweils über eine Stichleitung an zentrale Bereiche des Bussystems angebunden sind und bei denen beispielsweise diese Stichleitung physikalisch unterbrochen werden kann.

In herkömmlichen Personentransportanlagen wird eine Funktionsfähigkeit bzw. Funktionalität von Feldgeräten und der über das Bussystem etablierten Datenübertragung meist dadurch überwacht, dass die zentrale Steuereinheit in regelmässigen Zeitabständen jedes einzelne der Feldgeräte über das Bussystem einzeln mittels eines Anfragetelegramms anfragt und das angefragte Feldgerät daraufhin ein Antworttelegramm an die zentrale Steuereinheit zurückschickt. Bei einem solchen Fehlfunktionserkennungsverfahren müssen daher für jedes der Feldgeräte jeweils ein Anfragetelegramm über das Bussystem hin zu dem Feldgerät und ein Antworttelegramm von dem Feldgerät über das Bussystem zurück zu der zentralen Steuereinheit übertragen werden.

Insbesondere bei grossen Personentransportanlagen mit vielen Feldgeräten kann bei einem solchen herkömmlichen Fehlfunktionserkennungsverfahren für jeden Überwachungsvorgang ein erhebliches Volumen an über das Bussystem zu übertragenden Daten anfallen. Im Allgemeinen muss eine Anzahl von Datentelegrammen über das Bussystem übertragen werden, die dem Doppelten der Anzahl von Feldgeräten entspricht.

Ab einer gewissen Anzahl von in der Personentransportanlage vorhandenen Feldgeräten kann dies dazu führen, dass eine geforderte Fehlfunktionserkennungszeit bei der Überwachung der Feldgeräte überschritten wird. Eine solche Fehlfunktionserkennungszeit wird beispielsweise von Regulatorien vorgegeben, die fordern, dass zum Beispiel Fehlfunktionen bei einzelnen Feldgeräten, welche insbesondere für die Sicherheit der Personentransportanlage wesentlich sind, sehr schnell, das heisst innerhalb einer kurzen Zeitspanne, erkannt werden.

Um bei einer solchen mit sehr vielen Feldgeräten ausgestatteten Personentransportanlage ein Fehlfunktionserkennungsverfahren dennoch schnell genug durchführen zu können, um geforderte Fehlfunktionserkennungszeiten einzuhalten, musste herkömmlich beispielsweise eine Datenübertragungsrate innerhalb des Bussystems erhöht werden. Dies erforderte üblicherweise jedoch einen erhöhten geräteseitigen Aufwand sowohl bei dem Bussystem als auch bei den Feldgeräten und der Steuereinheit.

Für Ausführungsformen der hierin vorgeschlagenen Personentransportanlage wird vorgeschlagen, die Personentransportanlage dazu einzurichten, ein modifiziertes Fehlfunktionserkennungsverfahren durchführen zu können. Dieses modifizierte Fehlfunktionserkennungsverfahren ermöglicht unter anderem, ein Datenübertragungsvolumen beim Überwachen der Vielzahl von Feldgeräten erheblich zu reduzieren. Somit können geräteseitige Anforderungen an das Bussystem wie auch an die zentrale Steuereinheit und die Feldgeräte verringert werden und trotzdem geforderte Fehlfunktionserkennungszeiten eingehalten werden.

Für das modifizierte Fehlfunktionserkennungsverfahren wird zunächst angenommen, dass die Feldgeräte der Personentransportanlage in einer unverzweigten Kettenkonfiguration logisch miteinander verknüpft sind. Eine solche logische Verknüpfung von Feldgeräten kann unabhängig von einer tatsächlichen Verdrahtung oder elektrischen Verbindung zwischen den Feldgeräten angenommen werden. Tatsächlich sind die Feldgeräte über das Bussystem insbesondere derart miteinander verbunden, dass prinzipiell jedes Feldgerät mit jedem anderen Feldgerät Daten austauschen kann. Allerdings soll zumindest im Rahmen des Fehlfunktionserkennungsverfahrens davon ausgegangen werden, dass die Feldgeräte logisch miteinander in einer Art unverzweigter Kette miteinander verbunden sind, so dass jedes der Feldgeräte höchstens ein vorangehendes Feldgerät besitzt, von dem es Daten empfängt, und höchstens ein nachfolgendes Feldgerät besitzt, an das es Daten weiterleiten kann. Bis auf das erste und das letzte Feldgerät in der Kettenkonfiguration hat dabei jedes Feldgerät genau ein vorangehendes und genau ein nachfolgendes Feldgerät. Im Rahmen des Fehlfunktionserkennungsverfahrens soll daher jedes der Feldgeräte ähnlich wie in einer sogenannten "Daisy Chain" Daten nur von seinem jeweiligen vorangehenden Feldgerät erhalten und Daten jeweils nur an sein nachfolgendes Feldgerät weiterleiten. Eine Ausnahme hiervon bildet das erste Feldgerät in der Kettenkonfiguration, da dieses kein vorangehendes Feldgerät besitzt, sowie das letzte Feldgerät in der Kettenkonfiguration, da dieses kein nachfolgendes Feldgerät besitzt. Jedes der Feldgeräte der Kettenkonfiguration muss dabei eindeutig identifizierbar sein, beispielsweise mittels einer ihm eindeutig zugeordneten Identifikationsnummer (ID).

Gegebenenfalls kann die Kettenkonfiguration ringförmig geschlossen sein. Beispielsweise kann das letzte Feldgerät der Kettenkonfiguration mit dem ersten Feldgerät der Kettenkonfiguration logisch verbunden sein. Ein von dem letzten Feldgerät weiterzuleitendes Datentelegramm würde dann an das erste Feldgerät übermittelt werden. Alternativ kann das letzte Feldgerät der Kettenkonfiguration mit der zentralen Steuereinheit logisch verbunden sein. Ein von dem letzten Feldgerät weiterzuleitendes Datentelegramm würde dann an die Steuereinheit übermittelt werden.

Zur Durchführung des Fehlfunktionserkennungsverfahrens sendet die Steuereinheit zu Beginn des Überwachungszyklus ein Prüftelegramm über das Bussystem an das erste Feldgerät in der Kettenkonfiguration. Während des Überwachungszyklus ist jedes der Feldgeräte dazu ausgelegt, für den Fall, dass es ein solches Prüftelegramm empfängt, dieses Prüftelegramm über das Bussystem an sein jeweils nachfolgendes Feldgerät in der Kettenkonfiguration weiterzuleiten. Nachdem das erste Feldgerät zu Beginn des Überwachungszyklus das Prüftelegramm von der Steuereinheit empfangen hat, leitet dieses das Prüftelegramm somit an das zweite Feldgerät weiter, das zweite Feldgerät leitet das Prüftelegramm an das dritte Feldgerät weiter, usw. Dieses Weiterleiten des Prüftelegramms wird fortgesetzt, bis das Prüftelegramm die gesamte Kettenkonfiguration durchlaufen hat und das letzte Feldgerät erreicht hat. Da dieses letzte Feldgerät im Regelfall über kein nachfolgendes Feldgerät verfügt, endet hier im Allgemeinen das Weiterleiten des Prüftelegramms.

Während des Überwachungszyklus, das heisst während das Prüftelegramm von Feldgerät zu Feldgerät weitergereicht wird, überwacht die Steuereinheit die über das Bussystem erfolgende Datenkommunikation zwischen den Feldgeräten. Auf diese Weise kann die Steuereinheit erkennen, wenn eines der Feldgeräte das von ihm erhaltene Prüftelegramm nicht weiterleitet und somit die Kette des Weiterreichens des Prüftelegramms lokal unterbrochen wird. Dies kann die Steuereinheit als Indiz dafür werten, dass bei dem betreffenden Feldgerät eine Fehlfunktion vorliegt, bedingt beispielsweise durch einen technischen Mangel des Feldgeräts selbst oder durch einen Mangel bei der Anbindung des Feldgeräts an das Bussystem.

Im Gegensatz zu dem oben beschriebenen herkömmlichen Fehlfunktionserkennungsverfahren wird bei dem hier vorgeschlagenen Fehlfunktionserkennungsverfahren von der Steuereinheit nicht ein Anfragetelegramm an jedes einzelne der Feldgeräte gesendet und dann auf ein zurückkommendes Antworttelegramm gewartet. Stattdessen sendet die Steuereinheit lediglich einmalig eine Art Anfragetelegramm in Form eines Prüftelegramms an das in der logisch verknüpft angenommenen Kettenkonfiguration erste Feldgerät. Von dort aus wird das Prüftelegramm sequenziell an jedes der nachfolgenden Feldgeräte in der Kettenkonfiguration weitergereicht und dabei eine diese betreffende Datenkommunikation über das Bussystem von der zentralen Steuereinheit überwacht. Insgesamt kann dadurch die Anzahl von Übermittlungen von Prüftelegrammen generell auf die Anzahl vorhandener Feldgeräte reduziert werden. Im Vergleich zu dem herkömmlichen Fehlfunktionserkennungsverfahren kann hiermit das Datenübertragungsvolumen im Wesentlichen halbiert werden. Mit anderen Worten belastet bei dem hier vorgeschlagenen Fehlfunktionserkennungsverfahren pro Feldgerät lediglich ein kurzes Prüftelegramm das Bussystem, wohingegen es bei dem beschriebenen herkömmlichen Fehlfunktionserkennungsverfahren jeweils zwei Prüftelegramme waren.

Aufgrund des verringerten notwendigen Datenübertragungsvolumens bei dem Fehlfunktionserkennungsverfahren kann eine Datenübertragungsrate innerhalb der Personentransportanlage trotz einzuhaltender geforderter Fehlfunktionserkennungszeiten verhältnismässig gering gehalten werden, wodurch sich Vorteile in Bezug auf Kosten, Robustheit und/oder Datenübertragungslängen ergeben können. Beispielsweise können die für die Datenübertragung über das Bussystem notwendigen Komponenten des Bussystems, der Feldgeräte und der zentralen Steuereinheit mit einer einfachen und somit kostengünstigen und/oder robusten Hardware auskommen.

Für die Durchführung des beschriebenen Fehlfunktionserkennungsverfahrens werden insbesondere alle Feldgeräte der Aufzuganlage in einer unverzweigten Kettenkonfiguration logisch miteinander verknüpft und wie beschrieben überprüft. Es ist aber auch möglich, dass einzelne Feldgeräte nicht in das beschriebene Fehlfunktionserkennungsverfahren eingeschlossen und beispielsweise einer separaten Prüfung unterzogen werden.

Gemäss einer Ausführungsform weisen die Feldgeräte der Personentransportanlage entlang der Kettenkonfiguration fortlaufend nummerierte Identifikationsnummern (ID) auf. Ein Feldgerät leitet dann im Rahmen des Fehlfunktionserkennungsverfahrens ein empfangenes Prüftelegramm durch Inkrementieren der Adress-ID an das in der Kettenkonfiguration nächste Feldgerät weiter.

Mit anderen Worten kann es vorteilhaft sein, die Feldgeräte einer Personentransportanlage bezüglich ihrer IDs fortlaufend durchzunummerieren, so dass die ID eines Feldgeräts mit der Position dieses Feldgeräts innerhalb der während des Fehlfunktionserkennungsverfahrens angenommenen logischen Kettenkonfiguration korreliert. Je weiter hinten ein Feldgerät sich in der Kettenkonfiguration beispielsweise befindet, umso höher ist dabei seine ID.

Jedes Prüftelegramm ist damit durch eine Adress-ID gekennzeichnet, was einem oben beschriebenen Objekt-Identifier entspricht, und jedes Feldgerät reagiert auf das Prüftelegramm, welches eine seiner ID entsprechende Adress-ID aufweist. Damit kennzeichnet in diesem speziellen Fall die Adress-ID eines Prüftelegramms direkt seinen Empfänger.

Beispielsweise können die IDs der Feldgeräte einfach ganzzahlig durchnummeriert sein (ID = 1, 2, 3, 4, ..., n; n = Anzahl der Feldgeräte). Die Steuereinheit sendet dann zu Beginn eines Überwachungszyklus das Prüftelegramm an das Feldgerät mit der ID = 1. Dieses Feldgerät inkrementiert die Adress-ID, das heisst erhöht die Adress-ID in diesem Beispiel um den Wert "1" und schickt von sich aus das Prüftelegramm weiter an das Gerät mit der neuen Adress-ID, das heisst an das Feldgerät mit der ID = 2. Dort wird die Adress-ID erneut inkrementiert und das Prüftelegramm weiter an das Feldgerät mit der ID = 3 weitergeleitet, usw. Wenn das Prüftelegramm bei dem letzten Feldgerät in der Kettenkonfiguration, das heisst dem Feldgerät mit der ID = n, angelangt ist, kann das Weiterleiten des Prüftelegramms unterbrochen werden.

Die Regel für die Bildung der neuen Adress-ID, nämlich das Inkrementieren um den Wert "1" ist sehr einfach umsetzbar und insbesondere bei allen Feldgeräten gleich. Damit ist der Aufwand für eine Programmierung bzw. Konfiguration der einzelnen Feldgeräte sehr gering.

Alternativ kann auch bei diesem letzten Feldgerät die Adress-ID inkrementiert werden und das Feldgerät kann versuchen, das Prüftelegramm an ein in diesem Fall nicht existentes nachfolgendes Feldgerät weiterzuleiten. Da die die Kommunikation zwischen den Feldgeräten überwachende Steuereinheit weiss, dass das betreffende Feldgerät das letzte in der Kettenkonfiguration ist, wird es das Fehlschlagen des entsprechenden Weiterleitens des Prüftelegramms in diesem Fall nicht als vermeintliche Fehlfunktion erkennen.

Es wird angemerkt, dass unter einer fortlaufenden Nummerierung nichts zwangsweise zu verstehen ist, dass die IDs benachbarter Feldgeräte sich um den Wert "+1" unterscheiden müssen. Prinzipiell sind auch andere Inkrementalschritte vorstellbar. Beispielsweise können die Feldgeräte lediglich geradzahlig oder lediglich ungeradzahlig durchnummeriert werden, d.h. mit Inkrementalschritten von "+2". Das Inkrementieren der Adress-ID sollte dabei jeweils um einen Wert erfolgen, der dem zahlenmässigen Unterschied zwischen zwei benachbarten IDs entspricht. Auch ein Inkrementieren in negativen Inkrementalschritten von z.B. "-1", "-2" oder Ähnlichem, d.h. ein Dekrementieren, ist möglich.

Gemäss einer Ausführungsform sind mehrere der Feldgeräte oder sogar alle der Feldgeräte in der Personentransportanlage bezüglich ihrer Hardware gleich ausgebildet.

Mit anderen Worten können in der Personentransportanlage verwendete Feldgeräte vorzugsweise technisch baugleich konstruiert sein. Die Feldgeräte können sich dabei hinsichtlich in ihnen angewendeter Software oder in ihnen gespeicherter Daten unterscheiden, um die Feldgeräte beispielsweise zu individualisieren oder an lokale Zwecke oder Anwendungsbedingungen anzupassen. Insbesondere sollten die Identifikationsnummern für jedes Feldgerät individuell vergeben sein und somit eindeutig zugeordnet sein.

Beispielsweise kann in einer als Aufzuganlage implementierten Personentransportanlage eine Vielzahl von Stockwerktürschaltern als Feldgeräte dazu dienen, jeweils einen aktuellen Schliesszustand einer zugeordneten Stockwerktür zu überwachen. Alle diese Feldgeräte können bezüglich verwendeter Hardware gleich aufgebaut sein. Im konkret genannten Fall kann jedes Feldgerät über einen Türschalter, der den Schliesszustand der zugeordneten Tür detektiert, und einen Controller bzw. eine Schnittstelle verfügen, welche(r) dazu ausgelegt ist, den von dem Türschalter detektierten Schliesszustand in Form eines geeigneten Signals an das Bussystem zu übertragen und von diesem an die zentrale Steuereinheit weiterleiten zu lassen.

Konkret bezogen auf das hier vorgeschlagene Fehlfunktionserkennungsverfahren kann jedes der Feldgeräte dazu ausgebildet sein, über einen Dateneingang ein Prüftelegramm zu erhalten und in Reaktion auf dessen Empfang das Prüftelegramm an das in der Kettenkonfiguration nächste Feldgerät weiterzuleiten. Um ein solches Weiterleiten einfach implementieren zu können, kann wie im vorangehenden Abschnitt erläutert, jedes der Feldgeräte dazu ausgelegt sein, lediglich die in dem Prüftelegramm angegebene Adress-ID zu inkrementieren, wodurch das Prüftelegramm automatisch an das in der Kettenkonfiguration nächstfolgende Feldgerät adressiert wird. Auch das letzte Feldgerät in der Kettenkonfiguration kann derart ausgebildet sein, wobei ein Versuch dieses letzten Feldgeräts, das Prüftelegramm an ein nachfolgendes Feldgerät weiterzuleiten, naturgemäss fehlschlagen muss, dies aber im Rahmen des Fehlfunktionserkennungsverfahrens akzeptabel ist, da die Steuereinheit vorab vorhersehen kann, dass bei diesem letzten Feldgerät ein Weiterleiten des Prüftelegramms fehlschlagen wird.

Indem mehrere oder gar alle Feldgeräte innerhalb der Personentransportanlage mit gleicher Hardware ausgebildet sein können, kann eine Fertigung und/oder Montage solcher Feldgeräte standardisiert werden und somit Kosten gespart werden. Auch eine Logistik bei der Fertigung, Lagerung und Montage der Feldgeräte kann vereinfacht werden.

Gemäss einer Ausführungsform sind die Feldgeräte ferner dazu ausgelegt, im Rahmen des Fehlfunktionserkennungsverfahrens bei einem empfangenen Prüftelegramm vor dem Weiterleiten eine Modifikation in einer determinierten Weise durchzuführen. Die Steuereinheit überwacht dann im Rahmen des Fehlfunktionserkennungsverfahrens die erfolgreiche Durchführung dieser Modifikation.

Mit anderen Worten kann es vorteilhaft sein, während des Fehlfunktionserkennungsverfahrens das Prüftelegramm nicht lediglich von Feldgerät zu Feldgerät entlang der Kettenkonfiguration unverändert weiterzuleiten, sondern das Prüftelegramm vor jedem Weiterleiten in einer vorab festgelegten Weise zu modifizieren.

Vorzugsweise kann dabei vorgesehen sein, dass jedes der Feldgeräte ein von ihm empfangenes Prüftelegramm in einer gleichen Art und Weise modifiziert. In einer speziellen Ausführungsform umfasst die Modifikation des empfangenen Prüftelegramms eine Berechnung einer geänderten Prüfziffer als Teil des Prüftelegramms. Beispielsweise kann das Feldgerät mithilfe eines einfachen Zählers (Counter) das Prüftelegramm in vorbestimmter Weise inkrementieren. Alternativ kann das empfangene Prüftelegramm durch Berechnen eines CRC-Wertes (Cyclic Redundancy Check) modifiziert werden. Als weitere Alternative kann das Prüftelegramm durch Einrechnen eines vorbestimmten Wertes, beispielsweise der ID des jeweiligen Feldgeräts, modifiziert werden. Bei der Modifikation des Prüftelegramms ist lediglich erheblich, dass diese in einer deterministischen Weise erfolgt, das heisst vorhersehbar ist, und somit eine erfolgreiche Modifikation beispielsweise durch die Steuereinheit auch überprüfbar ist.

Indem jedes Feldgerät vor dem Weiterleiten des Prüftelegramms das Prüftelegramm deterministisch modifiziert und dies von der Steuereinheit überwacht werden kann, kann die Steuereinheit im Rahmen des Fehlfunktionserkennungsverfahrens nicht nur feststellen, ob das betreffende Feldgerät überhaupt noch funktioniert bzw. über das Bussystem kommunizieren kann, sondern es kann auch zumindest eine minimale Funktionalität jedes Feldgeräts nachgewiesen werden.

Das Vorsehen einer deterministischen Modifikationsmöglichkeit für das weiterzuleitende Prüftelegramm in einem Feldgerät erfordert dabei im Allgemeinen allenfalls einen geringen Mehraufwand für das Feldgerät und kann häufig mit einfacher Hardware oder simpler Software implementiert werden.

Gemäss einer Ausführungsform weist wenigstens eines der Feldgeräte mehrere Datenverarbeitungseinheiten auf. Im Rahmen des Fehlfunktionserkennungsverfahrens wird in diesem Fall das Prüftelegramm lediglich an diejenige Datenverarbeitungseinheit geleitet, welche bei einem Zustandswechsel dieses Feldgeräts eine diesen Zustandswechsel angebende Spontanmeldung ausgibt.

Mit anderen Worten können in der Personentransportanlage Feldgeräte vorgesehen sein, die mehrere verschiedene Datenverarbeitungseinheiten, beispielsweise in Form separater Prozessoren, Rechner oder Ähnlichem, aufweisen. Diese Datenverarbeitungseinheiten können sich beispielsweise hinsichtlich von ihnen durchzuführender Datenverarbeitungen unterscheiden. Zumindest eine dieser Datenverarbeitungseinheiten ist regelmässig dazu eingerichtet, einen Zustandswechsel des betreffenden Feldgeräts zu erkennen. Unter einem Zustandswechsel kann in diesem Zusammenhang eine Änderung einer von dem Feldgerät überwachten Grösse, wie beispielsweise ein Schliesszustand einer Stockwerktür, verstanden werden. Die betreffende Datenverarbeitungseinheit ist dabei dazu ausgestaltet, bei Erkennen eines solchen Zustandswechsels eine Spontanmeldung an die zentrale Steuereinheit auszugeben, um dieser den Zustandswechsel mitzuteilen.

Im Rahmen des Fehlfunktionserkennungsverfahrens kann es im Allgemeinen genügen, das Prüftelegramm lediglich an die zur Ausgabe der Spontanmeldung vorgesehene Datenverarbeitungseinheit zu übermitteln, da es im Allgemeinen genügt, Fehlfunktionen dieser Datenverarbeitungseinheit zu erkennen.

In der EP 2 741 993 B1 wird ein Testverfahren einer Aufzuganlage und eine Überwachungseinrichtung zum Durchführen des Testverfahrens beschrieben, bei denen ein als Busknoten bezeichnetes Feldgerät zwei Datenverbindungseinheiten in Form separater Mikroprozessoren aufweist.

Gemäss einer Ausführungsform ist die zentrale Steuereinheit dazu eingerichtet, im Rahmen des Fehlfunktionserkennungsverfahrens bei einem Erkennen, dass ein Feldgerät das Prüftelegramm nicht weiterleitet, abhängig von einer von dem betroffenen Feldgerät auszuführenden Funktionalität eine von mehreren möglichen Fehlfunktionsreaktionen zu initiieren, wobei die möglichen Fehlfunktionsreaktionen beispielsweise einen abrupten Notstopp der Personentransportanlage, einen Softstopp der Personentransportanlage, ein Begrenzen von Funktionen der Personentransportanlage, ein Ausgeben eines Alarmsignals an Nutzer der Personentransportanlage und ein Ausgeben eines Fehlfunktionssignals an Betreiber der Personentransportanlage umfassen. Es müssen dabei nicht alle der genannten Fehlfunktionsreaktionen initiiert werden können, ebenso sind weite Fehlfunktionsreaktionen denkbar.

Mit anderen Worten kann vorgesehen sein, dass die zentrale Steuereinheit in Reaktion darauf, dass bei dem Fehlfunktionserkennungsverfahren erkannt wurde, dass zumindest eines der Feldgeräte ein ihm zugeleitetes Prüftelegramm nicht weitergeleitet hat und somit von einer Fehlfunktion dieses Feldgeräts auszugehen ist, eine geeignete Reaktion hierauf initiiert. Dabei kann berücksichtigt werden, dass die verschiedenen in der Personentransportanlage vorgesehenen Feldgeräte zu unterschiedlichen Zwecken dienen können und dementsprechend unterschiedliche Funktionalitäten aufweisen können. Die Art und Weise, wie auf eine Fehlfunktion eines Feldgeräts reagiert werden soll, kann dabei von der für dieses Feldgerät implementierten Funktionalität abhängen. Die zentrale Steuereinheit soll dies beim Initiieren der Fehlfunktionsreaktion berücksichtigen und dementsprechend eine für die Fehlfunktion dieses speziellen Feldgeräts geeignete Reaktion initiieren.

Beispielsweise kann es notwendig erscheinen, bei Feldgeräten, die für die Sicherheit der Personentransportanlage eine sehr wesentliche Rolle spielen bzw. für die Sicherheit der Personentransportanlage wesentliche Funktionen überwachen, in Reaktion auf eine Fehlfunktion eines solchen Feldgeräts von der zentralen Steuereinheit einen abrupten Notstopp der Personentransportanlage initiieren zu lassen. Bei einem solchen Notstopp kann beispielsweise eine Bremse und ein Antrieb der Personentransportanlage stromlos geschaltet werden, so dass daraufhin die Personentransportanlage schnellstmöglich zum Stillstand gelangt.

Beim Erkennen von Fehlfunktionen anderer Feldgeräte mit anderen Funktionalitäten können weniger drastische Reaktionen genügen wie beispielsweise ein kontrolliertes Abbremsen und Stoppen der Personentransportanlage im Rahmen eines so genannten Softstopps oder lediglich ein Begrenzen von Funktionen der Personentransportanlage (beispielsweise, dass eine Aufzuganlage bestimmte Stockwerke innerhalb eines Gebäudes nicht mehr anfahren darf). In wieder anderen Fällen kann es in Reaktion auf das Erkennen einer Fehlfunktion genügen, lediglich an Nutzer der Personentransportanlage ein geeignetes Alarmsignal, zum Beispiel optisch und/oder akustisch, auszugeben, so dass diese zum Beispiel über mögliche Gefahren oder vorzunehmende Vorkehrungen beim Benutzen der Personentransportanlage informiert werden. Alternativ oder ergänzend kann auch ein Fehlfunktionssignal an den Betreiber der Personentransportanlage ausgegeben werden, so dass dieser beispielsweise Reparaturmassnahmen initiieren kann.

Es ist ausserdem möglich, dass nach dem Einleiten einer der oben beschriebenen Fehlfunktionsreaktionen das Verfahren der Erkennung von Fehlfunktionen der Feldgeräte fortgesetzt wird. Dazu kann die zentrale Steuereinheit ein entsprechendes Prüftelegramm an das Feldgerät senden, das logisch hinter dem fehlerhaften Feldgerät angeordnet ist. Damit wird die unterbrochene Prüfung wieder aufgenommen und fortgesetzt.

Gemäss einer Ausführungsform weist die Personentransportanlage wenigstens 20, vorzugsweise wenigstens 50, Feldgeräte in der logisch miteinander verknüpften Kettenkonfiguration auf.

Mit anderen Worten soll bei dem Fehlfunktionserkennungsverfahren eine verhältnismässig grosse Anzahl von Feldgeräten in der als logisch miteinander verknüpft angenommenen unverzweigten Kettenkonfiguration enthalten sein, so dass das Prüftelegramm während des Überwachungszyklus durch die gesamte Kettenkonfiguration geleitet werden kann und somit durch ein einziges initiierendes Übersenden des Prüftelegramms erstmals an das erste Feldgerät in der Kettenkonfiguration letztendlich das Auftreten von Fehlfunktionen bei einer Vielzahl von Feldgeräten überwacht werden kann.

Insbesondere bei einer derart grossen Anzahl von Feldgeräten in einer Personentransportanlage kann sich die Eigenschaft des hierin vorgeschlagenen Fehlfunktionserkennungsverfahrens positiv auswirken, gemäss der eine Anzahl von Datenübertragungen zum Überwachen der Vielzahl von Feldgeräten wesentlich kleiner ist, als dies bei herkömmlich durchgeführten Fehlfunktionserkennungsverfahren der Fall war. Dementsprechend kann selbst bei Vorliegen einer grossen Anzahl von Feldgeräten in der Personentransportanlage ein Überwachungszyklus ausreichend schnell durchgeführt werden, um beispielsweise strengen Regularien hinsichtlich einer Fehleraufdeckungszeit genügen zu können.

Gemäss einer Ausführungsform können das Bussystem, die zentrale Steuereinheit und die Feldgeräte für eine maximale Datenübertragungsrate von höchstens 19200 Baud (das heisst Bit/s), vorzugsweise höchstens 9600 Baud, ausgelegt sein.

Aufgrund des hierin vorgestellten sehr effizienten Fehlfunktionserkennungsverfahrens können selbst bei solchen relativ geringen Datenübertragungsraten Fehler bei Feldgeräten der Personentransportanlage ausreichend schnell erkannt werden. Die genannten Komponenten der Personentransportanlage, die lediglich für eine solch geringe Datenübertragungsrate ausgelegt sind, können kostengünstig bereitgestellt werden und können hinsichtlich ihrer Robustheit und/oder hinsichtlich einer zulässigen Datenübertragungslänge Komponenten, die für höhere Datenübertragungsraten ausgelegt sind, überlegen sein.

Gemäss einem zweiten Aspekt der vorliegenden Erfindung wird ein Verfahren zur Erkennung von Fehlfunktionen bei Feldgeräten in einer Personentransportanlage vorgeschlagen. Die Personentransportanlage umfasst dabei eine zentrale Steuereinheit, eine Mehrzahl von Feldgeräten sowie ein Bussystem, welche jeweils, wie oben in Bezug auf den ersten Aspekt der Erfindung beschrieben, ausgelegt sein können. Während des Verfahrens werden wiederum die Feldgeräte als in einer unverzweigten Kettenkonfiguration logisch miteinander verknüpft angenommen. Das Verfahren umfasst zumindest die folgenden Schritte: Zu Beginn eines Überwachungszyklus wird ein Prüftelegramm durch die zentrale Steuereinheit über das Bussystem an ein erstes Feldgerät in der Kettenkonfiguration gesendet. Während des Überwachungszyklus wird das Prüftelegramm durch jedes der Feldgeräte in Reaktion darauf, dass das betreffende Feldgerät das Prüftelegramm empfangen hat, über das Bussystem an ein in der Kettenkonfiguration nächstes Feldgerät weitergeleitet. Dieser Vorgang wird so oft wiederholt, bis das Prüftelegramm ein in der Kettenkonfiguration letztes Feldgerät erreicht hat. Dabei wird während des Überwachungszyklus eine über das Bussystem erfolgende Kommunikation zwischen den Feldgeräten überwacht, um zu erkennen, wenn ein Feldgerät in Reaktion auf das Empfangen des Prüftelegramms das Prüftelegramm nicht weiterleitet. Sollte bei einem solchen Überwachen ein nicht stattfindendes Weiterleiten des Prüftelegramms erkannt werden, kann dies als Indiz für eine Fehlfunktion bei dem betreffenden Feldgerät gewertet werden und daraufhin eine geeignete Reaktion in der Personentransportanlage initiiert werden.

Mit anderen Worten kann das Verfahren zur Erkennung von Fehlfunktionen innerhalb der Personentransportanlage spezifisch dazu ausgelegt sein, das Fehlfunktionserkennungsverfahren auszuführen, wie es weiter oben mit Bezug auf Ausführungsformen gemäss des ersten Aspekts der vorliegenden Erfindung beschrieben wurde. In umgekehrter Weise kann eine Personentransportanlage gemäss dem ersten Aspekt der vorliegenden Erfindung auch als dazu ausgelegt angesehen werden, eine Ausführungsform des Verfahrens gemäss dem zweiten Aspekt der vorliegenden Erfindung durchführen zu können.

Gemäss einem dritten Aspekt der vorliegenden Erfindung wird ein Computerprogrammprodukt vorgeschlagen, das computerlesbare Anweisungen aufweist, welche einen Computer bei deren Ausführung dazu anleiten, ein Verfahren gemäss einer Ausführungsform des zuvor genannten zweiten Aspekts der Erfindung auszuführen oder dieses entsprechend zu steuern.

Der Computer kann dabei beispielsweise Teil einer programmierbaren Steuereinheit der Personentransportanlage sein. Alternativ oder ergänzend kann der Computer oder Teile desselben auch in jeweiligen Feldgeräten einer Personentransportanlage integriert sein. Der Begriff Computer soll dabei breit ausgelegt werden und beispielsweise Prozessoren, CPUs oder Ähnliches umfassen. Ausserdem können Speichermedien vorgesehen sein, um dem Computer Daten zuzuführen bzw. für diesen Daten speichern zu können. Das Computerprogrammprodukt kann in einer beliebigen computerlesbaren Sprache formuliert sein.

Gemäss einem vierten Aspekt der vorliegenden Erfindung wird ein computerlesbares Medium beschrieben, welches ein darauf gespeichertes Computerprogrammprodukt gemäss einer Ausführungsform des oben genannten dritten Aspekts der Erfindung aufweist.

Mit anderen Worten kann das computerlesbare Medium ein beliebiges Medium sein, in dem computerlesbare Anweisungen temporär oder permanent gespeichert werden können und von einem Computer ausgelesen werden können. Die computerlesbaren Anweisungen können dabei auf unterschiedliche physikalische Weise gespeichert sein, beispielsweise in magnetischer Form, optischer Form, elektrischer Form etc. Beispielsweise kann das computerlesbare Medium eine CD, eine DVD, ein Flashspeicher, ein ROM (Read Only Memory), ein PROM (Programmable ROM), ein EPROM (Erasable PROM) etc. sein. Das computerlesbare Medium kann auch Teil einer grösseren Daten-speichernden Einheit wie eines Servers oder sogar des Internets sein, von dem das darin gespeicherte Computerprogrammprodukt heruntergeladen werden kann.

Es wird darauf hingewiesen, dass einige der möglichen Merkmale und Vorteile der Erfindung hierin mit Bezug auf unterschiedliche Ausführungsformen beschrieben sind, insbesondere teilweise mit Bezug auf eine Personentransportanlage und teilweise mit Bezug auf ein in dieser durchzuführendes Fehlfunktionserkennungsverfahren. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Personentransportanlage in Form einer Aufzuganlage gemäss einer Ausführungsform der vorliegenden Erfindung.
Fig. 2 veranschaulicht Schritte eines Fehlfunktionserkennungsverfahrens für eine Personentransportanlage gemäss einer Ausführungsform der vorliegenden Erfindung.

Die Figuren sind lediglich schematisch und nicht massstabsgetreu. Gleiche Bezugszeichen bezeichnen in den verschiedenen Figuren gleiche bzw. gleichwirkende Merkmale.

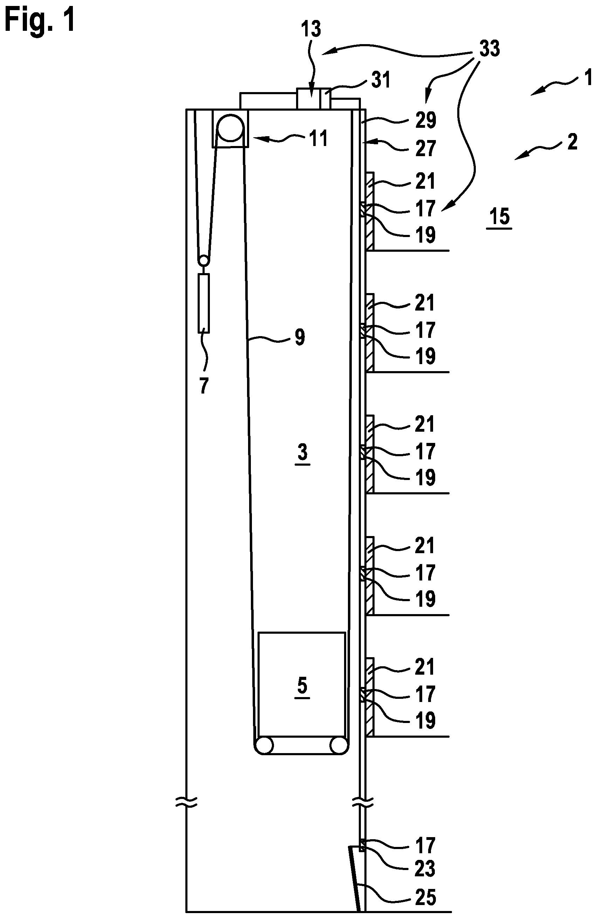

Fig. 1 zeigt eine erfindungsgemässe Personentransportanlage 1 in Form einer Aufzuganlage 2. Die Aufzuganlage 2 umfasst einen Aufzugschacht 3, in dem eine Aufzugskabine 5 und ein Gegengewicht 7 verfahren werden können. Die Aufzugskabine 5 und das Gegengewicht 7 sind hierzu an einem Seil- oder Riemen-artigen Tragmittel 9 gehalten, welches von einer Antriebsmaschine 11 verlagert werden kann. Eine Funktion der Aufzuganlage 2 und insbesondere eines Betriebs der Antriebsmaschine 11 sowie gegebenenfalls auch anderer Komponenten der Aufzuganlage 2 kann mithilfe einer zentralen Steuereinheit 13 gesteuert werden.

Um eine korrekte Funktion und insbesondere eine Sicherheit der Aufzuganlage 2 gewährleisten zu können, sind in einem die Aufzuganlage 2 aufnehmenden Bauwerk 15 mehrere Feldgeräte 17 aufgenommen. Die Feldgeräte 17 sind dabei über das Bauwerk 15 hin verteilt angeordnet.

Die Feldgeräte 17 können beispielsweise Türschalter 19 sein, welche einen Schliesszustand von Türen 21, insbesondere von Stockwerktüren, der Aufzuganlage 2 überwachen können. Ein Türschalter 19 wirkt dabei wie eine Art Sensor, welcher den aktuellen Schliesszustand einer ihm zugeordneten Tür 21 detektieren kann und sobald sich der Schliesszustand ändert dies beispielsweise als Datentelegramm in Form einer Spontanmeldung signalisieren kann.

Beispielsweise nahe einem Boden oder einer Grube des Aufzugschachts 3 kann ferner eine Leiter 25 gelagert sein, deren korrekt aufgeräumte Positionierung an einer Seitenwand des Aufzugschachts 3 beispielsweise mithilfe eines weiteren als Feldgerät 17 dienenden Schalters 23 überwacht wird.

Die Feldgeräte 17 können Teil eines Sicherheitskreises 27 der Aufzuganlage 2 sein und beispielsweise über eine serielle Verkabelung 29 mit der zentralen Steuereinheit 13 bzw. insbesondere mit einer zum Beispiel dort integriert vorgesehenen Sicherheitsüberwachungseinheit 31 (SSU - Safety Supervising Unit) verbunden sein. Die Verkabelung 29 sowie in den Feldgeräten 17 und/oder der zentralen Steuereinheit 13 vorgesehene Controller können dabei gemeinsam ein Bussystem 33 bilden, über das Datentelegramme zwischen den Teilnehmern einer Datenkommunikation ausgetauscht werden können.

Jedes der Feldgeräte 17 ist dazu eingerichtet, von einem Sensor erzeugte Sensorsignale auszugeben und/oder von einem Aktor umzusetzende Steuersignale zu empfangen. Dabei kann ein Feldgerät 17 beispielsweise selbst einen Sensor und/oder einen Aktor aufweisen und die von dem Sensor erzeugten Sensorsignale über externe Anschlüsse an andere Geräte, insbesondere an die zentrale Steuereinheit 13, ausgeben bzw. über solche externen Anschlüsse von anderen Geräten, insbesondere der zentralen Steuereinheit 13, empfangene Steuersignale an den Aktor leiten, damit dieser die darin enthaltenen Steueranweisungen umsetzen kann. Alternativ kann ein Feldgerät 17 lediglich als Knotenpunkt dienen, der beispielsweise Sensorsignale von einem externen Sensor oder von einem anderen Feldgerät 17 empfangen kann und diese dann an weitere Geräte ausgeben kann bzw. der von weiteren Geräten Steuersignale empfangen kann und diese dann an einen externen Aktor weitergibt, damit dieser die Steuersignale umsetzen kann.

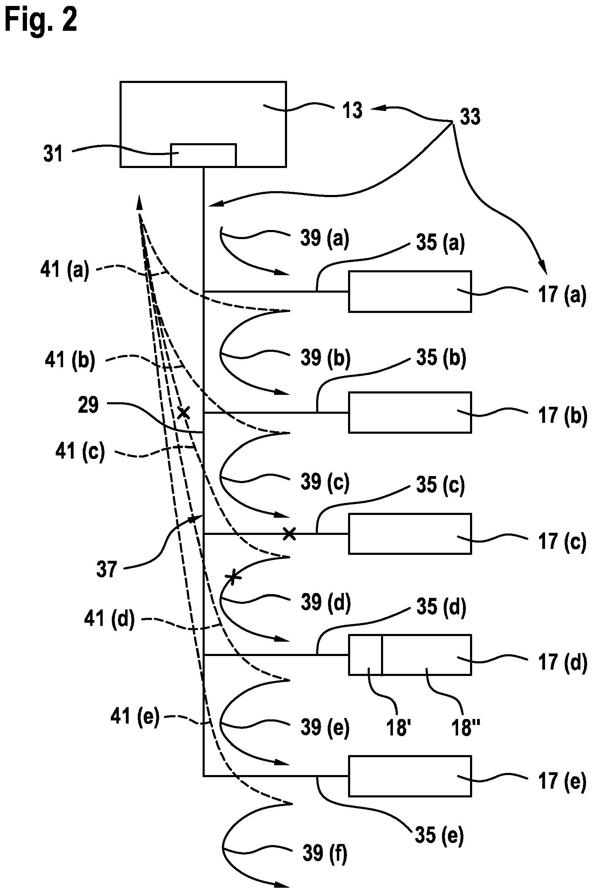

Die Personentransportanlage 1 ist speziell dazu eingerichtet, ein Fehlfunktionserkennungsverfahren durchzuführen. Hierzu kann die zentrale Steuereinheit 13 und/oder die Feldgeräte 17 durch geeignete Hardware-basierte und/oder Softwarebasierte Massnahmen dazu konfiguriert sein, dass im Rahmen der Durchführung des Fehlfunktionserkennungsverfahrens während eines Überwachungszyklus die nachfolgend beschriebenen Verfahrensschritte durchgeführt werden bzw. Eigenschaften der zentralen Steuereinheit 13 und/oder der Feldgeräte 17 entsprechend für die Durchführung solcher Verfahrensschritte eingerichtet sind. Mögliche Details von Ausgestaltungen des Fehlfunktionserkennungsverfahrens werden nachfolgend unter Bezugnahme auf die Fig. 2 erläutert.

In Fig. 2 ist sowohl eine tatsächliche, hardwaretechnische Verschaltung zwischen der zentralen Steuereinheit 13 und mehreren Feldgeräten 17(a), 17(b), 17(c), 17(d), 17(e) über das Bussystem 33 als auch eine während des Fehlfunktionserkennungsverfahrens anzunehmende logische Verknüpfung der Feldgeräte 17(a), 17(b), 17(c), 17(d), 17(e) in einer unverzweigten Kettenkonfiguration symbolisch dargestellt. Es wird darauf hingewiesen, dass in der Figur beispielgebend lediglich fünf Feldgeräte 17(a), 17(b), 17(c), 17(d), 17(e) dargestellt sind, wohingegen in praktischen Anwendungen oft eine wesentlich grössere Anzahl von Feldgeräten, beispielsweise mehr als 20, mehr als 50 oder sogar mehr als 100, in einer Personentransportanlage 1 wie z.B. einer so genannten High-Rise-Aufzuganlage 2 vorgesehen ist.

Bei der hardwaretechnischen Verschaltung ist die zentrale Steuereinheit 13 bzw. die in diese integrierte Sicherheitsüberwachungseinheit 31 über eine gemeinsame Datenleitung 37 sowie mehrere individuelle Stichleitungen 35(a), 35(b), 35(c), 35(d), 35(e) mit jedem der Feldgeräte 17(a), 17(b), 17(c), 17(d), 17(e) derart verbunden, dass Daten zwischen der zentralen Steuereinheit 13 und jedem der Feldgeräte 17(a), 17(b), 17(c), 17(d), 17(e) sowie zwischen den verschiedenen Feldgeräten 17(a), 17(b), 17(c), 17(d), 17(e) ausgetauscht werden können. Die gemeinsame Datenleitung 37 kann z.B. durch die Verdrahtung 29 implementiert sein, welche in Fig. 1 durch den Aufzugschacht 3 verlaufend dargestellt ist. Die Stichleitungen 35(a), 35(b), 35(c), 35(d), 35(e) können z.B. jeden als Feldgerät 17(a), 17(b), 17(c), 17(d), 17(e) wirkenden Türschalter 19 lokal mit der gemeinsamen Datenleitung 37 verbinden. Die zentrale Steuereinheit 13 sowie jedes der Feldgeräte 17(a), 17(b), 17(c), 17(d), 17(e) kann mit einer geeigneten Schnittstelle bzw. einem geeigneten Controller ausgestattet sein, um Daten über die Datenleitung 37 und die Stichleitungen 35(a), 35(b), 35(c), 35(d), 35(e) ausgeben bzw. von dieser empfangen zu können. Prinzipiell können mit einem derart implementierten Bussystem 33 Daten in beliebiger Weise zwischen der zentralen Steuereinheit 13 und den Feldgeräten 17(a), 17(b), 17(c), 17(d), 17(e) sowie zwischen den Feldgeräten 17(a), 17(b), 17(c), 17(d), 17(e) untereinander ausgetauscht werden, d.h., jedes an das Bussystem 33 angeschlossene Gerät kann prinzipiell mit jedem anderen Gerät kommunizieren, indem es Daten mit einem entsprechenden Objekt-Identifier, hier einer entsprechenden Adress-ID sendet.

Während des hierin vorgeschlagenen Fehlfunktionserkennungsverfahrens sollen Daten bzw. solche Daten enthaltende Prüftelegramme jedoch von der zentralen Steuereinheit 13 zu den Feldgeräten 17(a), 17(b), 17(c), 17(d), 17(e) bzw. zwischen den Feldgeräten 17(a), 17(b), 17(c), 17(d), 17(e) nur in einer Weise übertragen werden, als ob die Feldgeräte 17(a), 17(b), 17(c), 17(d), 17(e) in einer Art "Daisy Chain" in einer unverzweigten Kettenkonfiguration miteinander verknüpft wären. Dabei hat jedes der Feldgeräte im Regelfall (d.h. mit Ausnahme des in der Kettenkonfiguration ersten und des letzten Feldgeräts) genau ein vorangehendes Feldgerät, von dem es Daten empfängt, und genau ein nachfolgendes Feldgerät, an das es Daten weiterleitet.

Mit anderen Worten soll die zentrale Steuereinheit 13 ein Prüftelegramm zu Beginn eines Überwachungszyklus des Fehlfunktionserkennungsverfahrens an das erste Feldgerät 17(a) senden. Dies kann im Allgemeinen dadurch geschehen, dass die zentrale Steuereinheit 13 das Prüftelegramm mit einem Objekt-Identifier in Form einer Adress-ID versieht, welche der Identifikationsnummer des ersten Feldgeräts 17(a) entspricht und dann das Prüftelegramm über das Bussystem 33 kommuniziert.

Nachdem das erste Feldgerät 17(a) in der durch den Pfeil 39(a) symbolisierten Weise das Prüftelegramm erhalten hat, leitet das erste Feldgerät 17(a) dieses Prüftelegramm automatisiert an das in der angenommenen Kettenkonfiguration zweite Feldgerät 17(b) weiter, wie durch den Pfeil 39(b) angedeutet. Dieses Feldgerät 17(b) modifiziert wiederum die Adress-ID des Prüftelegramms und leitet dieses dann an das nächstfolgende Feldgerät 17(c) weiter, wie angedeutet durch den Pfeil 39(c). In analoger Weise soll das Prüftelegramm seriell durch die gesamte Kettenkonfiguration von Feldgerät 17(x) zu Feldgerät 17(x+1) weitergereicht werden, bis es schliesslich angedeutet durch die Pfeile 39(d) und 39(e) bei einem letzten Feldgerät 17(e) ankommt.

Dieses letzte Feldgerät 17(e) kann "wissen", dass es kein nachfolgendes Feldgerät mehr gibt und ein Weiterleiten des Prüftelegramms von sich aus beenden. Alternativ können auch alle Feldgeräte 17(a), 17(b), 17(c), 17(d), 17(e) im Wesentlichen identisch ausgestaltet bzw. konfiguriert sein und das letzte Feldgerät 17(e) kann in gleicher Weise wie die vorangehenden Feldgeräte 17(a), 17(b), 17(c), 17(d), das Prüftelegramm mit einer geänderten Adress-ID , wie durch den Pfeil 39(f) dargestellt, senden.

Während des gesamten Weiterleitens des Prüftelegramms von Feldgerät 17(x) zu Feldgerät 17(x+1) überwacht die zentrale Steuereinheit 13 bzw. die SSU 31 die über das Bussystem 33 erfolgende Datenkommunikation zwischen den Feldgeräten 17(a), 17(b), 17(c), 17(d), 17(e). Sofern alle Feldgeräte 17(a), 17(b), 17(c), 17(d), 17(e) wie auch das Bussystem 33 und insbesondere dessen Stichleitungen 35(a), 35(b), 35(c), 35(d), 35(e) fehlerfrei funktionieren, wird die zentrale Steuereinheit 13 erkennen, dass das Prüftelegramm sukzessive vom ersten Feldgerät 17(a) bis schliesslich zum letzten Feldgerät 17(e) weitergereicht wird und kann daraufhin davon ausgehen, dass eine Datenkommunikation innerhalb der Personentransportanlage 1 sowie deren Feldgeräte 17(a), 17(b), 17(c), 17(d), 17(e) fehlerfrei funktioniert.

Wenn jedoch bei dem Weiterleiten des Prüftelegramms eine Unterbrechung auftritt, wird dies von der zentralen Steuereinheit 13 erkannt und als Indiz für eine Fehlfunktion gewertet. Beispielsweise kann, wie in Fig. 2 durch das Kreuz "x" angedeutet, die Stichleitung 35(c) zu dem dritten Feldgerät 17(c) unterbrochen sein, so dass das Prüftelegramm von dem vorangehenden zweiten Feldgerät 17(b) kommend nicht entlang des Pfeils 39(c) zu dem dritten Feldgerät 17(c) übermittelt werden kann und entsprechend auch das Prüftelegramm dann nicht von dem dritten Feldgerät 17(c) zum nachfolgenden vierten Feldgerät 17(d) weitergereicht wird. Die zentrale Steuereinheit wird beim Überwachen der über das Bussystem 33 erfolgenden Kommunikation erkennen, dass kein Weiterleiten des Prüftelegramms von dem dritten Feldgerät 17(c) erfolgte und wird daraufhin von einer Fehlfunktion bei diesem dritten Feldgerät 17(c) ausgehen können.

In Reaktion hierauf kann eventuell eine Fehlfunktionsreaktion initiiert werden, die beispielsweise abhängig von der Wichtigkeit des fehlerhaften Feldgeräts 17(c) für eine Sicherheit der Personentransportanlage 1 unterschiedlich ausfallen kann und von einem abrupten Notstopp über einen Softstopp oder ein Begrenzen von Funktionen der Personentransportanlage 1 bis hin zu einem lediglichen Ausgeben von Alarmsignalen oder Informationen an Nutzer und/oder Betreiber der Personentransportanlage 1 reichen kann.

Nach dem Einleiten der Fehlfunktionsreaktionen kann die zentrale Steuereinheit 13 ein Prüftelegramm an das vierte Feldgerät 17(d) senden, das genauso aufgebaut ist, wie wenn es vom dritten Feldgerät 17(c) kommen würde. Damit wird die unterbrochene Prüfung wieder aufgenommen und fortgesetzt.
Um gegebenenfalls zumindest minimale Funktionsfähigkeiten der Feldgeräte 17(a), 17(b), 17(c), 17(d), 17(e) im Rahmen des Fehlfunktionserkennungsverfahrens ebenfalls feststellen zu können, kann vorgesehen sein, dass jedes der Feldgeräte 17(a), 17(b), 17(c), 17(d), 17(e) das Prüftelegramm nicht nur unverändert an das jeweils nachfolgende Feldgerät weiterleitet, sondern das Prüftelegramm bzw. eine in diesem enthaltene Prüfziffer in einer vorbestimmten Weise modifiziert, bevor das Prüftelegramm weitergeleitet wird. Durch ein Überwachen einer erfolgreichen Modifikation des Prüftelegramms bei jedem Weiterreichen kann die zentrale Steuereinheit 13 somit auch die minimale Funktionsfähigkeit jedes Feldgeräts 17(a), 17(b), 17(c), 17(d), 17(e) überwachen.

Sollte ein oder mehrere oder sogar alle der Feldgeräte 17(a), 17(b), 17(c), 17(d), 17(e) nicht nur eine einzelne Datenverarbeitungseinheit, sondern mehrere darin aufgenommene Datenverbindungseinheiten 18', 18" aufweisen, wie dies beispielsweise in der EP 2 741 993 B1 vorgeschlagen wird und für das Feldgerät 17(d) symbolisch dargestellt ist, kann es im Regelfall genügen, das Prüftelegramm im Rahmen des Fehlfunktionserkennungsverfahrens lediglich an diejenige Datenverarbeitungseinheit 18' eines Feldgeräts 17(d) zu leiten, welche bei einem Zustandswechsel des Feldgeräts 17(d) eine diesen Zustandswechsel angebende Spontanmeldung an die zentrale Steuereinheit 13 absendet.

Ein während des hierin vorgeschlagenen alternativen Fehlfunktionserkennungsverfahrens über das Bussystem 33 zu übertragendes Datenvolumen kann aufgrund des vorgeschlagenen seriellen Weiterleitens der Prüftelegramms im Vergleich zu herkömmlichen Ausfallprüfungen deutlich verringert werden, sodass beispielsweise Fehlfunktionen schneller erkannt werden können. Insbesondere kann mithilfe des hierin beschriebenen Fehlfunktionserkennungsverfahrens in einer Personentransportanlage 1 eine Anwesenheitsprüfung für alle Feldgeräte 17(a), 17(b), 17(c), 17(d), 17(e) zeitlich massiv verkürzt werden, beispielsweise auf weniger als 1s bei 60 Feldgeräten. Hierfür kann der Einsatz günstiger Hardware genügen und eine Datenübertragungsrate auf dem Bussystem 33 braucht nicht massiv erhöht werden. Hieraus können Vorteile bezüglich Kosten, Robustheit und Übertragungslänge resultieren.

Lediglich zu Vergleichszwecken sei abschliessend beschrieben, wie eine Anwesenheitsprüfung von Feldgeräten herkömmlicherweise in Personentransportanlagen durchgeführt wurde. Wie in Fig. 2 mit den gestrichelt dargestellten Linien 41(a), 41(b), 41(c), 41(d), 41(e) angedeutet, wurde von der zentralen Steuereinheit 13 an jedes einzelne der Feldgeräte 17(a), 17(b), 17(c), 17(d), 17(e) ein eigenes Anfragetelegramm geschickt und dann von dem derart getriggerten Feldgerät ein Antworttelegramm zurück an die zentrale Steuereinheit 13 übermittelt. Ein hierbei über das Bussystem 33 kommuniziertes Datenvolumen war in etwa doppelt so gross wie dasjenige, das bei dem hierin beschriebenen neuen Fehlfunktionserkennungsverfahren anfällt.

Abschliessend ist darauf hinzuweisen, dass Begriffe wie "aufweisend", "umfassend", etc. keine anderen Elemente oder Schritte ausschliessen und Begriffe wie "eine" oder "ein" keine Vielzahl ausschliessen. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### B ezugszeichenliste

- 1: Personentransportanlage
- 2: Aufzuganlage
- 3: Aufzugschacht
- 5: Aufzugskabine
- 7: Gegengewicht
- 9: Tragmittel
- 11: Antriebsmaschine
- 13: zentrale Steuereinheit
- 15: Bauwerk
- 17: Feldgeräte
- 18: Datenverarbeitungseinheiten
- 19: Türschalter
- 21: (Stockwerk-) Tür
- 23: Sicherungsschalter
- 25: Leiter
- 27: Sicherheitskreis
- 29: Verkabelung
- 31: Sicherheitsüberwachungseinheit (SSU)
- 33: Bussystem
- 35: Stichleitungen
- 37: zentrale Datenleitung
- 39: Datenübertragung andeutender Pfeil
- 41: Datenübertragung andeutender Pfeil

## Patentansprüche

1. Personentransportanlage (1) aufweisend:
eine zentrale Steuereinheit (13) zum Steuern von Funktionen der Personentransportanlage (1);
eine Mehrzahl von Feldgeräten (17, 17(a), 17(b), 17(c), 17(d), 17(e)), welche innerhalb der Personentransportanlage (1) räumlich verteilt angeordnet sind, und
ein Bussystem (33) zur Datenübertragung zwischen der zentralen Steuereinheit (13) und den Feldgeräten (17, 17(a), 17(b), 17(c), 17(d), 17(e)),
wobei jedes Feldgerät (17, 17(a), 17(b), 17(c), 17(d), 17(e)) dazu eingerichtet ist, Daten über das Bussystem (33) an die zentrale Steuereinheit (13) und/oder an ein anderes Feldgerät (17, 17(a), 17(b), 17(c), 17(d), 17(e)) auszugeben und/oder
wobei die zentrale Steuereinheit (13) dazu eingerichtet ist, Daten über das Bussystem (33) an zumindest eines der Feldgeräte (17, 17(a), 17(b), 17(c), 17(d), 17(e)) auszugeben,
wobei die Personentransportanlage (1) dazu eingerichtet ist, ein Fehlfunktionserkennungsverfahren durchzuführen, bei dem
- die Feldgeräte (17(a), 17(b), 17(c), 17(d), 17(e)) als in einer unverzweigten Kettenkonfiguration logisch miteinander verknüpft angenommen werden,
- die Steuereinheit (13) zu Beginn eines Überwachungszyklus ein Prüftelegramm über das Bussystem (33) an ein erstes Feldgerät (17(a)) in der Kettenkonfiguration sendet und
- während des Überwachungszyklus jedes der Feldgeräte (17(a), 17(b), 17(c), 17(d), 17(e)) in Reaktion darauf, dass das betreffende Feldgerät (17(a), 17(b), 17(c), 17(d), 17(e)) ein Prüftelegramm empfangen hat, das Prüftelegramm über das Bussystem (33) an ein in der Kettenkonfiguration nächstes Feldgerät (17(b), 17(c), 17(d), 17(e)17(b)) weiterleitet, bis das Prüftelegramm ein in der Kettenkonfiguration letztes Feldgerät (17(e)) erreicht,
**dadurch gekennzeichnet, dass**
- die Steuereinheit (13) während des Überwachungszyklus eine über das Bussystem (33) erfolgende Kommunikation zwischen den Feldgeräten (17(a), 17(b), 17(c), 17(d), 17(e)) überwacht, um zu erkennen, wenn ein Feldgerät (17(a), 17(b), 17(c), 17(d), 17(e)) das Prüftelegramm nicht weiterleitet.

2. Personentransportanlage nach Anspruch 1, wobei die Feldgeräte (17(a), 17(b), 17(c), 17(d), 17(e)) entlang der Kettenkonfiguration fortlaufend nummerierte IDs aufweisen und wobei ein Feldgerät (17(a), 17(b), 17(c), 17(d), 17(e)) im Rahmen des Fehlfunktionserkennungsverfahrens ein empfangenes Prüftelegramm durch Inkrementieren der Adress-ID an das in der Kettenkonfiguration nächste Feldgerät (17(b), 17(c), 17(d), 17(e)17(b)) weiterleitet.

3. Personentransportanlage nach einem der vorangehenden Ansprüche, wobei mehrere der Feldgeräte (17(a), 17(b), 17(c), 17(d), 17(e)) bezüglich ihrer Hardware gleich ausgebildet sind.

4. Personentransportanlage nach einem der vorangehenden Ansprüche, wobei die Feldgeräte (17(a), 17(b), 17(c), 17(d), 17(e)) ferner dazu ausgelegt sind, im Rahmen des Fehlfunktionserkennungsverfahrens bei einem empfangenen Prüftelegramm vor dem Weiterleiten eine Modifikation in einer determinierten Weise durchzuführen und die Steuereinheit (13) im Rahmen des Fehlfunktionserkennungsverfahrens die erfolgreiche Durchführung dieser Modifikation überwacht.

5. Personentransportanlage nach Anspruch 4, wobei die Modifikation eine Berechnung einer geänderten Prüfziffer als Teil des Prüftelegramms umfasst.

6. Personentransportanlage nach einem der vorangehenden Ansprüche, wobei wenigstens eines der Feldgeräte (17(a), 17(b), 17(c), 17(d), 17(e)) mehrere Datenverarbeitungseinheiten (18', 18") aufweist und wobei im Rahmen des Fehlfunktionserkennungsverfahrens das Prüftelegramm lediglich an diejenige Datenverarbeitungseinheit (18') geleitet wird, welche bei einem Zustandswechsel dieses Feldgeräts (17(a), 17(b), 17(c), 17(d), 17(e)) eine diesen Zustandswechsel angebende Spontanmeldung ausgibt.

7. Personentransportanlage nach einem der vorangehenden Ansprüche, wobei die zentrale Steuereinheit (13) dazu eingerichtet ist, im Rahmen des Fehlfunktionserkennungsverfahrens bei einem Erkennen, dass ein Feldgerät (17(a), 17(b), 17(c), 17(d), 17(e)) das Prüftelegramm nicht weiterleitet, abhängig von einer von dem betroffenen Feldgerät (17(a), 17(b), 17(c), 17(d), 17(e)) auszuführenden Funktionalität eine von mehreren möglichen Fehlfunktionsreaktionen zu initiieren, umfassend einen abrupten Notstop der Personentransportanlage (1), einen Softstop der Personentransportanlage (1), ein Begrenzen von Funktionen der Personentransportanlage (1), ein Ausgeben eines Alarmsignals an Nutzer der Personentransportanlage (1) und ein Ausgeben eines Fehlfunktionssignals an Betreiber der Personentransportanlage (1).

8. Personentransportanlage nach einem der vorangehenden Ansprüche, wobei jedes Feldgerät (17, 17(a), 17(b), 17(c), 17(d), 17(e)) dazu eingerichtet ist, von einem Sensor erzeugte Sensordaten über das Bussystem (33) an die zentrale Steuereinheit (13) auszugeben und/oder wobei die zentrale Steuereinheit (13) dazu eingerichtet ist, von einem Aktor umzusetzende Steuerdaten über das Bussystem (33) an eines der Feldgeräte (17, 17(a), 17(b), 17(c), 17(d), 17(e)) auszugeben.

9. Personentransportanlage nach einem der vorangehenden Ansprüche, wobei die Personentransportanlage (1) wenigstens 20 Feldgeräte (17(a), 17(b), 17(c), 17(d), 17(e)) in der logisch miteinander verknüpften Kettenkonfiguration umfasst.

10. Personentransportanlage nach einem der vorangehenden Ansprüche, wobei das Bussystem (33), die zentrale Steuereinheit (13) und die Feldgeräte (17(a), 17(b), 17(c), 17(d), 17(e)) für eine maximale Datenübertragungsrate von höchstens 19200 Baud, vorzugsweise höchstens 9600 Baud, ausgelegt sind.

11. Verfahren zur Erkennung von Fehlfunktionen bei Feldgeräten (17, 17(a), 17(b), 17(c), 17(d), 17(e)) in einer Personentransportanlage (1), wobei die Personentransportanlage
- eine zentrale Steuereinheit (13) zum Steuern von Funktionen der Personentransportanlage (1),
- eine Mehrzahl von Feldgeräten (17, 17(a), 17(b), 17(c), 17(d), 17(e)), welche innerhalb der Personentransportanlage (1) räumlich verteilt angeordnet sind, sowie
- ein Bussystem (33) zur Datenübertragung zwischen der zentralen Steuereinheit (13) und den Feldgeräten (17, 17(a), 17(b), 17(c), 17(d), 17(e))
aufweist,
wobei jedes Feldgerät (17, 17(a), 17(b), 17(c), 17(d), 17(e)) dazu eingerichtet ist, Daten über das Bussystem (33) an die zentrale Steuereinheit (13) und/oder an ein anderes Feldgerät (17, 17(a), 17(b), 17(c), 17(d), 17(e)) auszugeben und/oder
wobei die zentrale Steuereinheit (13) dazu eingerichtet ist, Daten über das Bussystem (33) an wenigstens eines der Feldgeräte (17, 17(a), 17(b), 17(c), 17(d), 17(e)) auszugeben, wobei die Feldgeräte (17(a), 17(b), 17(c), 17(d), 17(e)) als in einer unverzweigten Kettenkonfiguration logisch miteinander verknüpft angenommen werden,
wobei das Verfahren folgende Schritte aufweist:
- zu Beginn eines Überwachungszyklus: Senden eines Prüftelegramms durch die zentrale Steuereinheit (13) über das Bussystem (33) an ein erstes Feldgerät (17(a)) in der Kettenkonfiguration und
- während des Überwachungszyklus: Weiterleiten des Prüftelegramms durch jedes der Feldgeräte (17(a), 17(b), 17(c), 17(d), 17(e)) in Reaktion darauf, dass das betreffende Feldgerät (17(a), 17(b), 17(c), 17(d), 17(e)) das Prüftelegramm empfangen hat, über das Bussystem (33) an ein in der Kettenkonfiguration nächstes Feldgerät (17(b), 17(c), 17(d), 17(e)17(b)), bis das Prüftelegramm ein in der Kettenkonfiguration letztes Feldgerät (17(e)) erreicht,
**dadurch gekennzeichnet, dass**
- während des Überwachungszyklus: Überwachen einer über das Bussystem (33) erfolgenden Kommunikation zwischen den Feldgeräten (17(a), 17(b), 17(c), 17(d), 17(e)), um zu erkennen, wenn ein Feldgerät (17(a), 17(b), 17(c), 17(d), 17(e)) in Reaktion auf das Empfangen des Prüftelegramms das Prüftelegramm nicht weiterleitet.

12. Verfahren nach Anspruch 11, wobei die Feldgeräte (17(a), 17(b), 17(c), 17(d), 17(e)) entlang der Kettenkonfiguration fortlaufend nummerierte IDs aufweisen und wobei ein Feldgerät (17(a), 17(b), 17(c), 17(d), 17(e)) ein empfangenes Prüftelegramm durch Inkrementieren der Adress-ID an das in der Kettenkonfiguration nächste Feldgerät (17(b), 17(c), 17(d), 17(e)17(b)) weiterleitet.

13. Verfahren nach Anspruch 11 und 12, wobei die Feldgeräte (17(a), 17(b), 17(c), 17(d), 17(e)) bei einem empfangenen Prüftelegramm vor dem Weiterleiten eine Modifikation in einer determinierten Weise durchführen und die Steuereinheit (13) die erfolgreiche Durchführung dieser Modifikation überwacht.

14. Computerprogrammprodukt, aufweisend von einem Computer lesbare Anweisungen, welche einen Computer einer Personentransportanlage nach einen der Ansprüche 1-10 dazu anleitet, ein Verfahren gemäss einem der Ansprüche 11 bis 13 auszuführen oder zu steuern.

15. Computerlesbares Medium, aufweisend ein darauf gespeichertes Computerprogrammprodukt gemäss Anspruch 14.

## Claims

1. Passenger transport system (1), comprising:
a central control unit (13) for controlling functions of the passenger transport system (1);
a plurality of field devices (17, 17(a), 17(b), 17(c), 17(d), 17(e)), which are arranged inside the passenger transport system (1) in a spatially distributed manner, and
a bus system (33) for transferring data between the central control unit (13) and the field devices (17, 17(a), 17(b), 17(c), 17(d), 17(e)),
each field device (17, 17(a), 17(b), 17(c), 17(d), 17(e)) being configured to output data to the central control unit (13) and/or to another field device (17, 17(a), 17(b), 17(c), 17(d), 17(e)) via the bus system (33) and/or
the central control unit (13) being configured to output data to at least one of the field devices (17, 17(a), 17(b), 17(c), 17(d), 17(e)) via the bus system (33),
the passenger transport system (1) being configured to carry out a failure detection method, in which
- the field devices (17(a), 17(b), 17(c), 17(d), 17(e)) are received in a logically linked manner as in an unbranched chain configuration,
- the control unit (13) transmits a test telegram to a first field device (17(a)) in the chain configuration via the bus system (33) at the start of a monitoring cycle and
- during the monitoring cycle, in response to the relevant field device (17(a), 17(b), 17(c), 17(d), 17(e)) receiving a test telegram, each field device (17(a), 17(b), 17(c), 17(d), 17(e)) forwards the test telegram to a next field device (17(b), 17(c), 17(d), 17(e)17(b)) in the chain configuration via the bus system (33), until the test telegram reaches a final field device (17(e)) in the chain configuration,
**characterized in that**
- during the monitoring cycle, the control unit (13) monitors a communication between the field devices (17(a), 17(b), 17(c), 17(d), 17(e)) occurring via the bus system (33), in order to detect when a field device (17(a), 17(b), 17(c), 17(d), 17(e)) does not forward the test telegram.

2. Passenger transport system according to claim 1, wherein the field devices (17(a), 17(b), 17(c), 17(d), 17(e)) along the chain configuration have consecutively numbered IDs and wherein in the context of the failure detection method, a field device (17(a), 17(b), 17(c), 17(d), 17(e)) forwards a received test telegram to the next field device (17(b), 17(c), 17(d), 17(e)17(b)) in the chain configuration by incrementing the address ID.

3. Passenger transport system according to either of the preceding claims, wherein a plurality of the field devices (17(a), 17(b), 17(c), 17(d), 17(e)) are identical with regard to their hardware.

4. Passenger transport system according to any of the preceding claims, wherein the field devices (17(a), 17(b), 17(c), 17(d), 17(e)) are further designed to, in the context of the failure detection method, modify a received test telegram in a determined manner before forwarding and the control unit (13) monitors the successful implementation of this modification in the context of the failure detection method.

5. Passenger transport system according to claim 4, wherein the modification comprises calculating a changed test digit as part of the test telegram.

6. Passenger transport system according to any of the preceding claims, wherein at least one of the field devices (17(a), 17(b), 17(c), 17(d), 17(e)) comprises a plurality of data processing units (18', 18") and wherein in the context of the failure detection method, the test telegram is sent only to the data processing unit (18') that, if there is a change in state of this field device (17(a), 17(b), 17(c), 17(d), 17(e)), outputs a spontaneous report indicating this change in state.

7. Passenger transport system according to any of the preceding claims, wherein the central control unit (13) is configured to, in the context of the failure detection method, initiate one of a plurality of possible failure reactions if it is detected that a field device (17(a), 17(b), 17(c), 17(d), 17(e)) does not forward the test telegram, depending on a functionality to be carried out by the relevant field device (17(a), 17(b), 17(c), 17(d), 17(e)), the functionality comprising an abrupt emergency stop of the passenger transport system (1), a soft stop of the passenger transport system (1), limiting functions of the passenger transport system (1), outputting an alarm signal to users of the passenger transport system (1), and outputting a failure signal to operators of the passenger transport system (1).

8. Passenger transport system according to any of the preceding claims, wherein each field device (17, 17(a), 17(b), 17(c), 17(d), 17(e)) is configured to output sensor data generated by a sensor to the central control unit (13) via the bus system (33) and/or wherein the central control unit (13) is configured to output control data to be implemented by an actuator to one of the field devices (17, 17(a), 17(b), 17(c), 17(d), 17(e)) via the bus system (33).

9. Passenger transport system according to any of the preceding claims, wherein the passenger transport system (1) comprises at least 20 field devices (17(a), 17(b), 17(c), 17(d), 17(e)) in the logically linked chain configuration.

10. Passenger transport system according to any of the preceding claims, wherein the bus system (33), the central control unit (13) and the field devices (17(a), 17(b), 17(c), 17(d), 17(e)) are designed for a maximum data transfer rate of at most 19200 baud, preferably at most 9600 baud.

11. Method for detecting failures in field devices (17, 17(a), 17(b), 17(c), 17(d), 17(e)) in a passenger transport system (1), the passenger transport system comprising
- a central control unit (13) for controlling functions of the passenger transport system (1),
- a plurality of field devices (17, 17(a), 17(b), 17(c), 17(d), 17(e)), which are arranged inside the passenger transport system (1) in a spatially distributed manner, and
- a bus system (33) for transferring data between the central control unit (13) and the field devices (17, 17(a), 17(b), 17(c), 17(d), 17(e)),
each field device (17, 17(a), 17(b), 17(c), 17(d), 17(e)) being configured to output data to the central control unit (13) and/or to another field device (17, 17(a), 17(b), 17(c), 17(d), 17(e)) via the bus system (33) and/or
the central control unit (13) being configured to output data to at least one of the field devices (17, 17(a), 17(b), 17(c), 17(d), 17(e)) via the bus system (33),
the field devices (17(a), 17(b), 17(c), 17(d), 17(e)) being received in a logically linked manner as in an unbranched chain configuration,
the method comprising the following steps:
- at the start of a monitoring cycle: the central control unit (13) transmits a test telegram to a first field device (17(a)) in the chain configuration via the bus system (33) and
- during the monitoring cycle: in response to the relevant field device (17(a), 17(b), 17(c), 17(d), 17(e)) receiving a test telegram, each field device (17(a), 17(b), 17(c), 17(d), 17(e)) forwards the test telegram to a next field device (17(b), 17(c), 17(d), 17(e)17(b)) in the chain configuration via the bus system (33), until the test telegram reaches a final field device (17(e)) in the chain configuration,
**characterized in that**
- during the monitoring cycle: monitoring a communication between the field devices (17(a), 17(b), 17(c), 17(d), 17(e)) occurring via the bus system (33), in order to detect when a field device (17(a), 17(b), 17(c), 17(d), 17(e)) does not forward the test telegram in response to receiving the test telegram.

12. Method according to claim 11, wherein the field devices (17(a), 17(b), 17(c), 17(d), 17(e)) along the chain configuration have consecutively numbered IDs and wherein a field device (17(a), 17(b), 17(c), 17(d), 17(e)) forwards a received test telegram to the next field device (17(b), 17(c), 17(d), 17(e)17(b)) in the chain configuration by incrementing the address ID.

13. Method according to claims 11 and 12, wherein the field devices (17(a), 17(b), 17(c), 17(d), 17(e)) modify a received test telegram in a determined manner before forwarding and the control unit (13) monitors the successful implementation of this modification.

14. Computer program product, comprising instructions that can be read by a computer and that instructs a computer of a passenger transport system according to any of claims 1 to 10 to carry out or control a method according to any of claims 11 to 13.

15. Computer-readable medium, comprising a computer program product according to claim 14 stored thereon.

## Revendications

1. Installation de transport de personnes (1), comprenant :
une unité de commande centrale (13) permettant de commander les fonctions de l'installation de transport de personnes (1) ;
une pluralité d'appareils de terrain (17, 17(a), 17(b), 17(c), 17(d), 17(e)) qui sont répartis dans l'espace à l'intérieur de l'installation de transport de personnes (1), et un système de bus (33) permettant la transmission de données entre l'unité de commande centrale (13) et les appareils de terrain (17, 17(a), 17(b), 17(c), 17(d), 17(e)), chaque appareil de terrain (17, 17(a), 17(b), 17(c), 17(d), 17(e)) étant configuré pour délivrer des données par l'intermédiaire du système de bus (33) à l'unité de commande centrale (13) et/ou à un autre appareil de terrain (17, 17(a), 17(b), 17(c), 17(d), 17(e)), et/ou l'unité de commande centrale (13) étant configurée pour délivrer des données par l'intermédiaire du système de bus (33) à au moins l'un des appareils de terrain (17, 17(a), 17(b), 17(c), 17(d), 17(e)), l'installation de transport de personnes (1) étant configurée pour mettre en œuvre un procédé d'identification des dysfonctionnements selon lequel
- les appareils de terrain (17(a), 17(b), 17(c), 17(d), 17(e)) sont combinés logiquement les uns aux autres sous la forme d'une configuration en chaîne non ramifiée,
- l'unité de commande (13) envoie un télégramme de contrôle par l'intermédiaire du système de bus (33) à un premier appareil de terrain (17(a)) dans la configuration en chaîne pour débuter un cycle de surveillance, et,
- pendant le cycle de surveillance, chacun des appareils de terrain (17(a), 17(b), 17(c), 17(d), 17(e)), en réponse à la réception d'un télégramme de contrôle par l'appareil de terrain (17(a), 17(b), 17(c), 17(d), 17(e)) concerné, transfère le télégramme de contrôle par l'intermédiaire du système de bus (33) à un appareil de terrain (17(b), 17(c), 17(d), 17(e) 17(b)) suivant dans la configuration en chaîne, jusqu'à ce que le télégramme de contrôle atteigne un appareil de terrain (17(e)) placé en dernier dans la configuration en chaîne, **caractérisé en ce que**
- pendant le cycle de surveillance, l'unité de commande (13) surveille une communication ayant lieu par l'intermédiaire du système de bus (33) entre les appareils de terrain (17(a), 17(b), 17(c), 17(d), 17(e)) pour identifier si un appareil de terrain (17(a), 17(b), 17(c), 17(d), 17(e)) ne transfère pas le télégramme de contrôle.

2. Installation de transport de personnes selon la revendication 1, dans laquelle les appareils de terrain (17(a), 17(b), 17(c), 17(d), 17(e)) présentant des identifiants numérotés de manière consécutive le long de la configuration en chaîne, et dans laquelle un appareil de terrain (17(a), 17(b), 17(c), 17(d), 17(e)), dans le cadre du procédé d'identification des dysfonctionnements, transfère un télégramme de contrôle reçu à l'appareil de terrain suivant (17(b), 17(c), 17(d), 17(e), 17(b)) dans la configuration en chaîne, par incrémentation de l'identifiant de l'adresse.

3. Installation de transport de personnes selon l'une des revendications précédentes, dans laquelle une pluralité d'appareils de terrain (17(a), 17(b), 17(c), 17(d), 17(e)) sont identiques par leur matériel.

4. Installation de transport de personnes selon l'une des revendications précédentes, dans laquelle les appareils de terrain (17(a), 17(b), 17(c), 17(d), 17(e)) sont en outre conçus pour effectuer, dans le cadre du procédé d'identification des dysfonctionnements, une modification de manière bien définie sur un télégramme de contrôle reçu avant de le transférer, et l'unité de commande (13) surveille la bonne mise en œuvre de cette modification dans le cadre du procédé d'identification des dysfonctionnements.

5. Installation de transport de personnes selon la revendication 4, dans laquelle la modification consiste à calculer un chiffre de contrôle modifié en tant que partie du télégramme de contrôle.

6. Installation de transport de personnes selon l'une des revendications précédentes, dans laquelle au moins l'un des appareils de terrain (17(a), 17(b), 17(c), 17(d), 17(e)) comporte une pluralité d'unités de traitement de données (18', 18"), et dans laquelle, dans le cadre du procédé d'identification des dysfonctionnements, le télégramme de contrôle est uniquement transféré à l'unité de traitement de données (18') qui, en cas de changement d'état dudit appareil de terrain (17(a), 17(b), 17(c), 17(d), 17(e)), émet un message spontané indiquant ledit changement d'état.

7. Installation de transport de personnes selon l'une des revendications précédentes, dans laquelle l'unité de commande centrale (13) est configurée, dans le cadre du procédé d'identification des dysfonctionnements, suite à l'identification selon laquelle un appareil de terrain (17(a), 17(b), 17(c), 17(d), 17(e)) ne transfère pas le télégramme de contrôle et en fonction d'une fonctionnalité destinée à être exécutée par l'appareil de terrain (17(a), 17(b), 17(c), 17(d), 17(e)) concerné, pour déclencher l'une de plusieurs réactions de dysfonctionnement possibles, dont un arrêt d'urgence brusque de l'installation de transport de personnes (1), un arrêt progressif de l'installation de transport de personnes (1), une limitation des fonctions de l'installation de transport de personnes (1), une émission d'un signal d'alarme aux utilisateurs de l'installation de transport de personnes (1) et une émission d'un signal de dysfonctionnement aux opérateurs de l'installation de transport de personnes (1).

8. Installation de transport de personnes selon l'une des revendications précédentes, dans laquelle chaque appareil de terrain (17, 17(a), 17(b), 17(c), 17(d), 17(e)) est configuré pour délivrer, par l'intermédiaire du système de bus (33), des données de capteur générées par un capteur à l'unité de commande centrale (13), et/ou dans laquelle l'unité de commande centrale (13) est configurée pour délivrer, par l'intermédiaire du système de bus (33), des données de commande à mettre en œuvre par un actionneur à l'un des appareils de terrain (17, 17(a), 17(b), 17(c), 17(d), 17(e)).

9. Installation de transport de personnes selon l'une des revendications précédentes, l'installation de transport de personnes (1) comprenant au moins 20 appareils de terrain (17(a), 17(b), 17(c), 17(d), 17(e)) logiquement combinés les uns aux autres dans la configuration en chaîne.

10. Installation de transport de personnes selon l'une des revendications précédentes, dans laquelle le système de bus (33), l'unité de commande centrale (13) et les appareils de terrain (17(a), 17(b), 17(c), 17(d), 17(e)) sont conçus pour un débit de transmission de données maximal de 19 200 bauds au maximum, de préférence de 9 600 bauds au maximum.

11. Procédé d'identification des dysfonctionnements des appareils de terrain (17, 17(a), 17(b), 17(c), 17(d), 17(e)) dans une installation de transport de personnes (1), l'installation de transport de personnes comportant
- une unité de commande centrale (13) permettant de commander les fonctions de l'installation de transport de personnes (1),
- une pluralité d'appareils de terrain (17, 17(a), 17(b), 17(c), 17(d), 17(e)) qui sont répartis dans l'espace à l'intérieur de l'installation de transport de personnes (1), ainsi qu'un
- système de bus (33) permettant la transmission de données entre l'unité de commande centrale (13) et les appareils de terrain (17, 17(a), 17(b), 17(c), 17(d), 17(e)), chaque appareil de terrain (17, 17(a)), 17(b), 17(c), 17(d), 17(e)) étant configuré pour transmettre des données par l'intermédiaire du système de bus (33) à l'unité de commande centrale (13) et/ou à un autre appareil de terrain (17, 17(a), 17(b), 17(c), 17(d), 17(e)), et/ou l'unité de commande centrale (13) étant configurée pour délivrer des données par l'intermédiaire du système de bus (33) à au moins l'un des appareils de terrain (17, 17(a), 17(b), 17(c), 17(d), 17(e)), les appareils de terrain (17(a), 17(b), 17(c), 17(d), 17(e)) étant combinés logiquement les uns aux autres sous la forme d'une configuration en chaîne non ramifiée, le procédé comprenant les étapes consistant :
- au début d'un cycle de surveillance, à : envoyer un télégramme de contrôle par l'unité de commande centrale (13) par l'intermédiaire du système de bus (33) à un premier appareil de terrain (17(a)) dans la configuration en chaîne et,
- pendant le cycle de surveillance, à : transférer le télégramme de contrôle par chacun des appareils de terrain (17(a), 17(b), 17(c), 17(d), 17(e)), en réponse à la réception d'un télégramme de contrôle par l'appareil de terrain (17(a), 17(b), 17(c), 17(d), 17(e)) concerné, par l'intermédiaire du système de bus (33) à un appareil de terrain (17(b), 17(c), 17(d), 17(e) 17(b)) suivant dans la configuration en chaîne, jusqu'à ce que le télégramme de contrôle atteigne un appareil de terrain (17(e)) placé en dernier dans la configuration en chaîne, **caractérisé en ce que**,
- pendant le cycle de surveillance : la surveillance d'une communication ayant lieu par l'intermédiaire du système de bus (33) entre les appareils de terrain (17(a), 17(b), 17(c), 17(d), 17(e)) permet d'identifier si un appareil de terrain (17(a), 17(b), 17(c), 17(d), 17(e)) ne transfère pas le télégramme de contrôle en réponse à la réception du télégramme de contrôle.

12. Procédé selon la revendication 11, dans lequel les appareils de terrain (17(a), 17(b), 17(c), 17(d), 17(e)) présentent des identifiants numérotés de manière consécutive le long de la configuration en chaîne, et dans lequel un appareil de terrain (17(a), 17(b), 17(c), 17(d), 17(e)) transfère un télégramme de contrôle reçu à l'appareil de terrain suivant (17(b), 17(c), 17(d), 17(e), 17(b)) dans la configuration en chaîne, par incrémentation de l'identifiant de l'adresse.

13. Procédé selon les revendications 11 et 12, dans lequel les appareils de terrain (17(a), 17(b), 17(c), 17(d), 17(c)) effectuent une modification d'une manière bien définie sur un télégramme de contrôle reçu avant de le transférer, et l'unité de commande (13) surveille la bonne mise en œuvre de cette modification.

14. Produit de programme informatique comportant des instructions lisibles par ordinateur, lesquelles instructions amènent un ordinateur d'une installation de transport de personnes selon l'une des revendications 1 à 10 à exécuter ou à commander un procédé selon l'une des revendications 11 à 13.

15. Support lisible par ordinateur, sur lequel est stocké un produit de programme informatique selon la revendication 14.
